# EUROPEAN PATENT SPECIFICATION

(11) **EP 2 285 757 B1**
(45) Date of publication and mention of the grant of the patent: **02.08.2017**
(21) Application number: 08748954.8
(22) Date of filing: 10.04.2008
(51) Int. Cl.: C04B 41/53

(54) **METHOD FOR INCREASING THE SLIP RESISTANCE OF A FLOOR SURFACE**
VERFAHREN ZUR ERHÖHUNG DER RUTSCHFESTIGKEIT EINER FUSSBODENOBERFLÄCHE
PROCÉDÉ D'AUGMENTATION DE LA RÉSISTANCE AU GLISSEMENT DE LA SURFACE D'UN SOL

(43) Date of publication of application: 23.02.2011
(73) Proprietor: Floor Safety Innovation B.v., 2723 RS Zoetermeer (NL)
(72) Inventor: VAN DER WOLF, Robert, Alexander, NL-2724 EJ Zoetermeer (NL)
(74) Representative: van Kooij, Adriaan
(86) International application number: PCT/EP2008/003073
(87) International publication number: WO 2009/124573

(56) References cited:
- US-A- 5 423 910
- US-A- 5 698 021

## Description

The present invention relates to a composition for use in treatment of a floor surface resulting in increased slip resistance of the surface. The present invention further relates to a method for treatment of a floor surface resulting in increased slip resistance of the surface. The present invention also relates to the use of a composition for the treatment of a floor surface.

Slip and fall accidents due to slippery floors are a major cause of serious injuries, such as fractures (e.g. of the hip and the skull), paralysis, back injuries, etc. Apart from physical suffering, these accidents can lead to substantial compensation claims. Various well-known methods exist for improving anti-slip properties of surfaces, especially floor surfaces. These methods include abrasive blasting, coating, and chemical etching. Major drawbacks of existing methods include, for example, substantial modification of the aesthetic characteristics of the floor surface (e.g. removing of glaze), time-consuming and hazardous treatment procedures and insufficient durability of the anti-slip properties.

US 5 423 910 discloses an aqueous solution for treating concrete, glazed enamel or porcelain surfaces to increase the coefficient of friction of the surface using a composition comprising phosphoric acid, ammonium bifluoride and a surfactrant in water.

US 5 698 021 discloses a composition comprising ammonium bifluoride, hydrochloric acid and a surfactant for increasing coeeficient of friction on surfaces of natural stone.

It is the object of the present invention to provide a composition and a method for, at least partially, solving the above-mentioned problems.

The above object is met by the method according to claim 1.

Specifically, the invention provides a composition and a method for use in the treatment of stone floor surfaces to render the surface improved and durable anti-slip properties, which allows for an effective, environmentally friendly, short-time treatment, without substantially etching the surface or changing the aesthetic characteristics of the floor surface.

According to a first embodiment, the present invention provides a composition for use in treatment of a stone floor surface resulting in increased slip resistance of the surface, which composition is an aqueous composition comprising at least a suitable inorganic fluoride-containing compound in the range of 2.6% (w/w) to 4.6% (w/w). The present inorganic fluoride-containing compound is ammonium bifluoride.

The composition comprises ammonium bifluoride in a range from 2.6 % (w/w) to 4.6 % (w/w), hydrochloric acid in a range from 0.1 % (w/w) to 0.25% (w/w), and phosphoric acid in a range from 4 % (w/w) to 6 % (w/w).

Optionally, the composition further comprises one or more suitable additives. Suitable additives are preferably selected from the group consisting of surfactant, dye, and fragrance.

It is a further object of the present invention to provide a method for treatment of a stone floor surface resulting in increased slip resistance of the surface, comprising contacting the surface during a sufficient time period with an aqueous composition comprising at least a suitable inorganic fluoride-containing compound.

The method comprises contacting the surface during a sufficient time period with a composition as defined above.

According to a preferred embodiment, the method comprises cleaning the floor surface prior to contacting the surface with the composition. This cleaning step improves the effectiveness of the subsequent treatment. It is preferred that the composition of the present invention is applied to a clean and dry surface.

According to a preferred embodiment, the method further comprises contacting the surface with an aqueous solution having basic properties, in order to neutralize remaining composition comprising at least a suitable inorganic fluoride-containing compound according to the present invention. It is preferred that the surface is not allowed to dry before contacting the surface with the aqueous solution having basic properties.

The term "stone surface" in this application is to be understood as comprising various kinds of porous stone and stone-like surfaces, preferably natural stone, such as marble and granite, porcelain, glazed or unglazed ceramic tiles, concrete, cement, terrazzo, etc.

In this application, aqueous composition is to be understood as a composition which does not substantially comprise organic solvents.

The method according to the present invention is suitable to provide various kinds of stone and stone-like surfaces with anti-slip properties. Preferably, the surface is a porous stone surface, preferably comprising natural pores. Examples of preferred floors and surfaces which can be successfully treated according to the method of the present invention include, but are not limited to, natural stone, such as marble and granite, porcelain, glazed or unglazed ceramic tiles, concrete, cement, terrazzo, etc.

According to a preferred embodiment of the method of the present invention, the sufficient time period for contacting the surface with the composition is about 1 to about 20 minutes.

When the surface comprises natural stone or porcelain, the sufficient time period for contacting the surface with the composition is preferably between about 3 and about 7 minutes, more preferably between about 4 and about 6 minutes, even more preferably about 5 minutes.

When the surface comprises ceramic, the sufficient time period for contacting the surface with the composition is preferably between about 1 and about 7 minutes, more preferably between about 2 and about 6 minutes, even more preferably between about 3 and about 5 minutes.

When the surface comprises concrete or terrazzo, the sufficient time period for contacting the surface with the composition is preferably between about 5 and about 12 minutes, more preferably between about 6 and about 11 minutes, even more preferably between about 7 and about 10 minutes.

The treatment according to the present invention provides the surface with anti-slip properties by a general roughening of the surface.

The following example is intended to illustrate the present invention, and is not to limit the invention in any way. In the example, reference is made to the appended figures wherein,
- **Figure 1:**: shows an increased surface roughness of a floor treatment with the method and composition according to the present invention;
- **Figure 2:**: shows the skewness of the floor after treatment of the floor with the method and composition according to the present invention.

### Example

A surface texture analysis of ceramic tiles treated according to the present invention has been carried out.

### Method:

Analysis of the surface texture was carried out on a ceramic tile treated according to the method of the present invention and another tile that was left untreated. The composition used in these experiments comprised 91.2 % (w/w) water, 3.6 % (w/w) ammonium bifluoride (CAS number: 1341-49-7), 0.147 % (w/w) hydrochloric acid (CAS number: 7647-01-0), 4.98 % (w/w) phosphoric acid (CAS number: 7664-38-2), and 0.017 % (w/w) surfactant, dye and fragrance. The treatment comprised a 4 minutes treatment with the composition as defined above.

The nature of the tiles surface prevented direct measurement of the surface topography through optical means. Replicas of the surface were taken using Microset™ silicone rubber replicate.

Surface topography measurements were carried out on the Wyko NT optical interferometer using Vertical Scanning mode (VSI). Measurements were also conducted using the SOMICRONIC SURFASCAN stylus profilometer, this enabled a larger area to be measured, and also allowed measurement through fluid.

Surfstand analysis software package was used to invert the replicate measurements to give an accurate depiction of the tile surface, and it was also used to analyse the measurements taken by the SURFASCAN.

4 measurements were taken for each of the three states (dry untreated, dry treated, and wet treated surface) using the Wyko NT 2000 optical interferometer to gain an average for parametric analysis.

The measurement protocol: Instrument: WYKO NT2000; Mode: VSI; Magnification: 20 x; Measurement Area: 0.3mm x 0.3mm approximate; Instrument: SOMICRONIC SURFASCAN; Mode: Contacting Stylus; Measurement Area: 3mm x 3mm.

### Parametric Analysis:

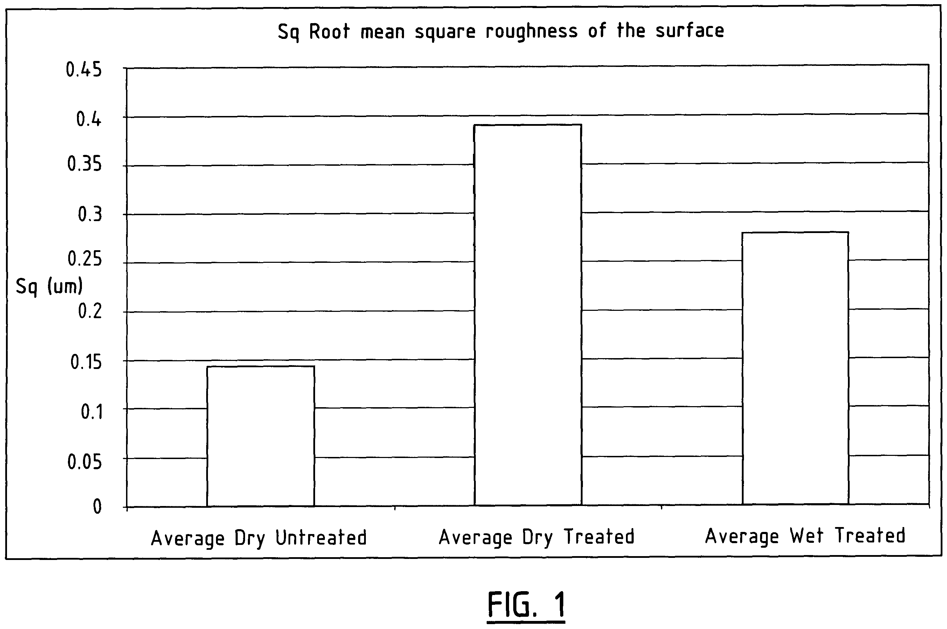

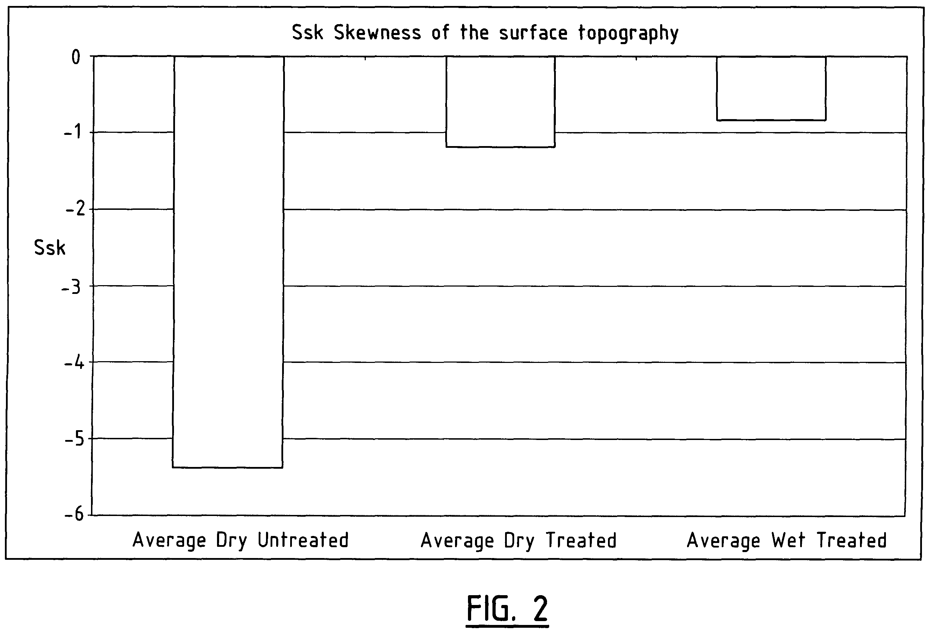

3D surface roughness parameters were calculated for each of the measurements taken. An average was calculated from four measurements for each of the three states mentioned in the protocol. **Figure 1** and **figure 2** depict the average values for those parameters which are appropriate in indicating the differences in surface topography in this instance.

### Sq - Root mean square roughness of the surface

Sq (the root mean square roughness of the surface, **figure 1**) is an indicator of the surface roughness or smoothness. From **figure 1**, it can be seen that the application of the surface treatment causes an increase in surface roughness; this surface roughness is then decreased following application of fluid/water. This indicates that the application of fluid causes a change in the surface roughness.

### Ssk - Skewness of the surface topography

Although Sq indicates a change in the surface, it does not give information as to the nature of that change. The skewness parameter Ssk (**figure 2**) is a measure of the asymmetry of surface deviations about the mean plane. It can be a good indicator of the presence of peaks or pits of a surface.

**Figure 2** shows the Ssk values to be negative for all of the surface states, this indicates that the dominant feature (which is causing the surface roughness) is pits, rather than peaks on the surface.

The untreated surface shows a lower value for Ssk, this indicates one of two things, either the prevalence of pits is higher, or that the pits are of a greater magnitude prior to surface treatment application.

Following application of fluid to the treated surface, the Ssk values tends back towards zero, indicating that the change in surface roughness depicted by Sq is due to decreasing prevalence of pits and increasing prevalence of peaks on the basic surface.

### Conclusions:

Although the surface topography of the tile surface has higher root mean square roughness following treatment, there is no indication of large pits or valleys forming. It would appear that the treatment produces a general roughening, however the increase in roughness is considered not to be of a level easily registered by tactile feel, this is reinforced by the measurements completed over a large area using the contacting stylus method.

The surface treatment that is applied affects the surface in such a way that the pits which are present on the surface following treatment are reduced in prevalence in some way when the surface becomes wet. It appears that this change in the surface could be linked to the evident increase in friction when the surface is wet.

The measurements performed at a high magnification on the optical interferometer show definite changes in the surface topography following application of the surface treatment and again after the application of fluid/water.

The measurements on this micro level show a definite change in both the surface roughness and the way in which the surface is dominated by pits becomes less pronounced. The measurements performed with the contacting stylus over a larger area show little change in the surface roughness.

The surface treatment changes the surface, it does not appear to completely remove the glaze and etch the surface, however on a micro scale a roughening of the surface does occur. Following application of water to the treated surface, a temporary change occurs to the surface. From the visual surface topography maps and from the parameter analysis, it appears that the pitting caused by the initial treatment of the tile surface lessens. This could be due to one or both of the following. The pits become less prominent due to some change in their size or shape.

This change in the surface topography could influence the frictional properties of the tile when water is present.

To further illustrate the effectiveness of the method of the present invention, the coefficient of static friction has been determined for treated compared to untreated ceramic tiles. The tiles were treated as described above.

The static friction coefficients were determined using a NBS-Brungraber Portable Slip Tester according to ASTM F462. In the test method used in the present invention, a test foot was placed on a surface to be examined and subsequently loaded with a constant vertical load of 25 kg. Then, an increasing horizontal force was applied on the test foot until the test foot slided. From the ratio of the horizontal force (tangential force) required to produce sliding and the vertical force (normal force), the static friction coefficient can be deduced. Low values correspond with low friction, and, hence, with a slippery surface.

Measurements of static friction coefficients were performed with leather and rubber test soles in dry conditions, and with silastic (a silicone rubber used in this test to imitate human skin) in wet conditions, for untreated ceramic tiles and ceramic tiles treated according to the method of the present invention.

Results are given in Table 1

**Table 1: Static friction coefficients of ceramic tiles**

| Tile | Friction coefficient | | |
|---|---|---|---|
| | Leather (dry) | Rubber (dry) | Silastic (wet) |
| Untreated | | | |
| 1 | 0.37 | 0.42 | 0.26 |
| 2 | 0.60 | 0.56 | 0.27 |
| 3 | 0.49 | 0.61 | 0.23 |

| Treated | | | |
|---|---|---|---|
| 4 | 0.69 | 0.74 | 0.47 |
| 5 | 0.83 | 0.86 | 0.49 |
| 6 | 0.77 | 0.81 | 0.41 |
| Tiles 1 and 4: white-grey flamed glaze; tiles 2 and 5: off white-grey flamed glaze; tiles 3 and 6: red glaze | | | |

From these results, it is clear that treatment of the surface of the tiles according to the present invention leads to increased friction coefficients, and, hence, increased slip resistance of the surface, in both dry and wet conditions.

## Claims

1. Method for treatment of a stone floor surface resulting in increased slip resistance of the surface, comprising step (a) comprising contacting the surface during a sufficient time period with a composition, which composition is an aqueous composition comprising at least a suitable inorganic fluoride-containing compound, wherein the composition comprises ammonium bifluoride, hydrochloric acid and phosphoric acid wherein the composition comprises ammonium bifluoride in a range from 2.6 % (w/w) to 4.6 % (w/w), hydrochloric acid in a range from 0.1 % (w/w) to 0.25 % (w/w), and phosphoric acid in a range from 4 % (w/w) to 6 % (w/w).

2. Method according to claim 1, wherein the composition further comprises one or more additives selected from the group consisting of surfactant, dye, and fragrance.

3. Method according to claim 1 or claim 2, further comprising, after step (a), contacting the surface with an aqueous solution having basic properties.

4. Method according to any one of claims 1 to 3, further comprising cleaning the surface prior to step (a).

5. Method according to any one of claims 1 to 4, wherein the sufficient time period is between 1 to 20 minutes.

6. Method according to any one of claims 1 to 4, wherein the sufficient time period is between 3 and 7 minutes when the surface comprises natural stone or porcelain, preferably wherein the sufficient time period is between 4 and 6 minutes when the surface comprises natural stone or porcelain.

7. Method according to any one of claims 1 to 4, wherein the sufficient time period is between 1 and 7 minutes when the surface comprises ceramic, preferably wherein the sufficient time period is between 2 and 6 minutes when the surface comprises ceramic.

8. Method according to any one of claims 1 to 4, wherein the sufficient time period is between 5 and 12 minutes when the surface comprises concrete or terrazzo, preferably, wherein the sufficient time period is between 6 and 11 minutes when the surface comprises concrete or terrazzo.

9. Aqueous composition comprises ammonium bifluoride in a range from 2.6 % (w/w) to 4.6 % (w/w), hydrochloric acid in a range from 0.1 % (w/w) to 0.25 % (w/w), and phosphoric acid in a range from 4 % (w/w) to 6 % (w/w).

10. Use of an aqueous composition according to claim 9 for the treatment of a stone floor surface.

## Patentansprüche

1. Verfahren zur Behandlung einer Steinbodenoberfläche, die zu einer erhöhten Rutschfestigkeit der Oberfläche führt, umfassend den Schritt a), umfassend:
Inkontaktbringen der Oberfläche während einer ausreichenden Zeitspanne mit einer Zusammensetzung, die eine wässrige Zusammensetzung ist, welche zumindest eine geeignete anorganische Fluorid enthaltende Verbindung umfasst,
wobei die Zusammensetzung Ammoniumbifluorid, Salzsäure und Phosphorsäure umfasst,
wobei die Zusammensetzung Ammoniumbifluorid in einem Bereich von 2,6% (Gew./Gew.) bis 4,6% (Gew./Gew.), Salzsäure in einem Bereich von 0,1% (Gew./Gew.) bis 0,25% (Gew./Gew.) und Phosphorsäure in einem Bereich von 4% (Gew./Gew.) bis 6% (Gew./Gew.) umfasst.

2. Verfahren nach Anspruch 1, wobei die Zusammensetzung ferner einen oder mehrere Zusätze umfasst, die aus der Gruppe ausgewählt werden, bestehend aus Tensid, Farbstoff und Duftstoff.

3. Verfahren nach Anspruch 1 oder 2, ferner umfassend:
Inkontaktbringen der Oberfläche nach dem Schritt a) mit einer wässrigen Lösung, die basische Eigenschaften aufweist.

4. Verfahren nach einem der Ansprüche 1 bis 3, ferner umfassend:
Reinigen der Oberfläche vor dem Schritt a).

5. Verfahren nach einem der Ansprüche 1 bis 4, wobei die ausreichende Zeitspanne zwischen 1 bis 20 Minuten beträgt.

6. Verfahren nach einem der Ansprüche 1 bis 4, wobei die ausreichende Zeitspanne zwischen 3 und 7 Minuten beträgt, wenn die Oberfläche Naturstein oder Porzellan umfasst, wobei die ausreichende Zeitspanne vorzugsweise zwischen 4 und 6 Minuten beträgt, wenn die Oberfläche Naturstein oder Porzellan umfasst.

7. Verfahren nach einem der Ansprüche 1 bis 4, wobei die ausreichende Zeitspanne zwischen 1 und 7 Minuten beträgt, wenn die Oberfläche Keramik umfasst, wobei die ausreichende Zeitspanne vorzugsweise zwischen 2 und 6 Minuten beträgt, wenn die Oberfläche Keramik umfasst.

8. Verfahren nach einem der Ansprüche 1 bis 4, wobei die ausreichende Zeitspanne zwischen 5 und 12 Minuten beträgt, wenn die Oberfläche Beton oder Terrazzo umfasst, wobei die ausreichende Zeitspanne vorzugsweise zwischen 6 und 11 Minuten beträgt, wenn die Oberfläche Beton oder Terrazzo umfasst.

9. Wässrige Zusammensetzung, umfassend Ammoniumbifluorid in einem Bereich von 2,6% (Gew./Gew.) bis 4,6% (Gew./Gew.), Salzsäure in einem Bereich von 0,1% (Gew./Gew.) bis 0,25% (Gew./Gew.) und Phosphorsäure in einem Bereich von 4% (Gew./Gew.) bis 6% (Gew./Gew.).

10. Verwendung einer wässrigen Zusammensetzung nach Anspruch 9 zur Behandlung einer Steinbodenoberfläche.

## Revendications

1. Procédé de traitement d'une surface de sol en pierre résultant en une résistance au glissement augmentée de la surface, comprenant l'étape (a) comprenant la mise en contact de la surface pendant une durée suffisante avec une composition, laquelle composition est une composition aqueuse comprenant au moins un composé inorganique approprié contenant du fluor, dans lequel la composition comprend du bifluorure d'ammonium, de l'acide chlorhydrique et de l'acide phosphorique, dans lequel la composition comprend du bifluorure d'ammonium dans une plage de 2,6 % (p/p) à 4,6 % (p/p), de l'acide chlorhydrique dans une plage de 0,1 % (p/p) à 0,25 % (p/p) et de l'acide phosphorique dans une plage de 4 % (p/p) à 6 % (p/p).

2. Procédé selon la revendication 1, dans lequel la composition comprend en outre un ou plusieurs additifs choisis dans le groupe constitué de tensioactif, colorant et parfum.

3. Procédé selon la revendication 1 ou la revendication 2, comprenant en outre, après l'étape (a), la mise en contact de la surface avec une solution aqueuse ayant des propriétés basiques.

4. Procédé selon l'une quelconque des revendications 1 à 3, comprenant en outre le nettoyage de la surface avant l'étape (a).

5. Procédé selon l'une quelconque des revendications 1 à 4, dans lequel la durée suffisante est entre 1 à 20 minutes.

6. Procédé selon l'une quelconque des revendications 1 à 4, dans lequel la durée suffisante est entre 3 et 7 minutes lorsque la surface comprend de la pierre naturelle ou de la porcelaine, de préférence dans lequel la durée suffisante est entre 4 et 6 minutes lorsque la surface comprend de la pierre naturelle ou de la porcelaine.

7. Procédé selon l'une quelconque des revendications 1 à 4, dans lequel la durée suffisante est entre 1 et 7 minutes lorsque la surface comprend de la céramique, de préférence dans lequel la durée suffisante est entre 2 et 6 minutes lorsque la surface comprend de la céramique.

8. Procédé selon l'une quelconque des revendications 1 à 4, dans lequel la durée suffisante est entre 5 et 12 minutes lorsque la surface comprend du béton ou du terrazzo, de préférence dans lequel la durée suffisante est entre 6 et 11 minutes lorsque la surface comprend du béton ou du terrazzo.

9. Composition aqueuse comprenant du bifluorure d'ammonium dans une plage de 2,6 % (p/p) à 4,6 % (p/p), de l'acide chlorhydrique dans une plage de 0,1 % (p/p) à 0,25 % (p/p) et de l'acide phosphorique dans une plage de 4 % (p/p) à 6 % (p/p).

10. Utilisation d'une composition aqueuse selon la revendication 9, pour le traitement d'une surface de sol en pierre.
